# EUROPÄISCHE PATENTSCHRIFT

(11) **EP 2 188 885 B1**
(45) Veröffentlichungstag und Bekanntmachung des Hinweises auf die Patenterteilung: **13.07.2016**
(21) Anmeldenummer: 08785187.9
(22) Anmeldetag: 29.07.2008
(51) Int. Cl.: H02K 41/03, H02K 5/22

(54) **STATOR FÜR EINEN LINEARMOTOR**
STATOR FOR A LINEAR MOTOR
STATOR POUR MOTEUR LINÉAIRE

(30) Priorität: 16.08.2007 DE 102007038847
(43) Veröffentlichungstag der Anmeldung: 26.05.2010
(73) Patentinhaber: DORMA Deutschland GmbH, 58256 Ennepetal (DE)
(72) Erfinder: HUFEN, Michael, 42289 Wuppertal (DE); RICHSTEIN, Axel, 58099 Hagen (DE); SCHÜLER, Thomas, 58300 Wetter (DE)
(74) Vertreter: Balder IP Law, S.L.
(86) Internationale Anmeldenummer: PCT/EP2008/006240
(87) Internationale Veröffentlichungsnummer: WO 2009/021623

(56) Entgegenhaltungen:
- EP-A- 0 959 549
- EP-A- 1 122 391
- DE-A1-102004 046 824
- US-A- 5 825 104

## Beschreibung

Die Erfindung betrifft einen Stator eines Linearmotors insbesondere zum Antrieb von Schiebetüren.

Linearantriebe für Schiebetüranlagen sind bekannt. Um die Position eines mittels eines Linearantriebs angetriebenen Schiebetürflügels zu ermitteln, werden im Stator angeordnete Hall-Sensoren verwendet. Diese sind üblicherweise in eine Spulenanordnung des Stators des jeweiligen Linearmotors integriert. Eine derartige Sensor-Anordnung ist beispielsweise aus US5825104 bekannt.

Nachteilig ist, dass die Hall-Sensoren zum Zeitpunkt des Herstellens des Stators bereits in die Spulenanordnung integriert werden müssen. Dies führt dazu, dass die Hall-Sensoren nicht getrennt von der Spulenanordnung geprüft werden können. Ist die Spulenanordnung zudem als Modul ausgebildet und beispielsweise mittels einer Vergussmasse vergossen, ist ein späterer Austausch defekter Hall-Sensoren nicht möglich. Zudem müssen die Dimensionierung bzw. Empfindlichkeit der Hall-Sensorik zum Zeitpunkt der Produktion der Spulenanordnung bekannt sein. Eine spätere Anpassung ist entweder nicht oder nur mittels Rekalibrierung der Auswerteelektronik möglich, was aufwendig ist. Es ist aus dem Stand der Technik ferner bekannt, Hall Sensoren auch außerhalb des Stators anzuordnen, wie beispielsweise in DE102004046824A1 beschrieben.

Die Erfindung ist ein Linearmotor-Stator gemäß den Anspruchen 1-17.

Der Erfindung liegt die Aufgabe zugrunde, die Nachteile des Standes der Technik zumindest zu verringern.

Erfindungsgemäß wird die Aufgabe dadurch gelöst, dass ein Stator für einen Linearmotor ein Statorteil, das eine Spulenanordnung aufweist, ein Anschlussteil, das externe Anschlüsse, eine Sensoranordnung mit zumindest einem Hall-Sensor und externe Anschlüsse für diese Sensoranordnung aufweist, und ein Halteteil zur Aufnahme des Statorteils und des Anschlussteils umfasst. Das Halteteil ist in einen Anschlussteil-Einsetzab-schnitt und einen Statorteil-Einsetzabschnitt unterteilt. Es weist Haltevorrichtungen auf, die eine ortsfeste, zueinander positionsgenaue und lösbare Anordnung des Statorteils und des Anschlussteils ermöglichen.

Die Separierung in Stator- und Anschlussteil bietet den Vorteil, dass das Statorteil nur für die Erzeugung des magnetischen Wechselfelds zuständig ist. Die Sensorik ist im Anschlussteil untergebracht. Dadurch muss die Sensorik nicht zum Zeitpunkt der Statorteil-Herstellung vorhanden sein. Beide Teile, Statorteil und Anschlussteil bzw. Sensorik, können parallel und getrennt, d. h. unabhängig, voneinander geprüft werden, was insbesondere bei verschiedenen Herstellern für das Statorteil und die Sensorik bzw. das Anschlussteil günstig ist.

Zudem ist es dadurch möglich, die Sensorik bei einem Ausfall auszutauschen, ohne gleich das ganze Statorteil austauschen zu müssen, was zusätzliche Kostenvorteile bringt.

Der erfindungsgemäße Stator weist ferner vorzugsweise zumindest zwei Befestigungsabschnitte auf. Die Befestigungsabschnitte sind so ausgebildet, dass der Stator mittels ihnen an einem Trageprofil angebracht werden kann, das seinerseits beispielsweise an einer Wand oder einer Decke befestigt ist bzw. wird.

Die Anbringung des Halteteils erfolgt mittels Fixierungsmitteln. Diese können erfindungsgemäß mittels Klemmschrauben gebildet sein, die sich bei einem Verschrauben gegen eine Innenwand eines Trageprofils abstützen, wobei sich das Halteteil an einer gegenüberliegenden Seite am Trageprofil abgestützt. Dies bietet die Möglichkeit, auch nach der Montage des Stators die Position des Stators zu verändern.

Alternativ können Fixierungsmittel Schrauben umfassen, die bei einer Montage in ein Gehäuse des Trageprofils eingeschraubt werden. Dies bietet die Möglichkeit, am Tragprofil die beschriebene Abstützung für den Stator weglassen und ein zumindest in Seitenwandbereichen weniger stabiles Halteteil verwenden zu können, was Kostenvorteile bringt.

Erfindungsgemäß weist das Halteteil eine Trennwand auf, die die Unterteilung des Halteteils in den Anschlussteil-Einsetzabschnitt und den Statorteil-Einsetzabschnitt bewirkt und zwischen Anschlussteil und Statorteil angeordnet ist. Diese Separierung kann mittels eines der zumindest zwei Befestigungsabschnitte erfolgen. Diese Separierung in zwei getrennte Abschnitte ermöglicht eine separate Optimierung des Halteteils hinsichtlich der Montage des Anschlussteil und des Statorteils.

Vorzugsweise umfasst die Trennwand Leitungsdurchführungen, die einem Fixieren von Anschlussleitungen dienen, die zwischen das Anschlussteil und das Statorteil zu koppeln sind. Dadurch sind die Leitungen sicher gehalten, und eine Gefahr des Beschädigens einer der Anschlussleitungen ist in hohem Maße verringert, wenn nicht gar beseitigt. Zudem erleichtert dies die Anbringung des erfindungsgemäßen Stators an dem Tragprofil, da er als Ganzes am Tragprofil montiert werden kann.

Die Haltevorrichtungen können Federelemente umfassen, mittels denen das Statorteil gegen eine dem Statorteil zugewandte Seite der Trennwand bzw. des Befestigungsabschnitts federnd gedrückt wird. Dies führt zu einer positionsgenauen Anordnung des Statorteils.
Alternativ oder zusätzlich können die Haltevorrichtungen zumindest einen, im Statorteil-Einsetzabschnitt und in einer Seitenwand des Halteteils ausgebildeten Haltevorsprung aufweisen, der sich von der Seitenwand in Richtung einer anderen, gegenüberliegenden Seitenwand des Halteteils erstreckend angeordnet ist. Ein Spulenkörper der Spulenanordnung des Statorteils weist zumindest eine Halteausnehmung derart auf, dass die zumindest eine Halteausnehmung bei einem Einsetzen des Statorteils in den Statorteil-Einsetzabschnitt des Halteteils mit dem zumindest einen Haltevorsprung in Eingriff gelangt. Dadurch ist eine besonders einfache Montage und positionsgenaue Anordnung des Statorteils möglich.

Alternativ können zumindest zwei benachbarte Spulen der Spulenanordnung zumindest an einander gegenüberliegenden und zugewandten Ecken jeweils eine Aussparung aufweisen. Die Aussparungen sind so geformt, dass die sie bei zusammengesetztem Statorteil die Form der vorstehend beschriebenen Halteausnehmung ergeben und bei einem Einsetzen in das Halteteil mit einem jeweiligen Haltevorsprung in Eingriff gelangen.

Dies hat den Vorteil, dass anstelle einer Ausnehmung eine Aussparung in der jeweiligen Ecke beispielsweise mittels einer Abschrägung vorgesehen werden kann.

Vorzugsweise weist jede Spule an der jeweils gleichen Stelle solch eine der beschriebenen Ausnehmungen bzw. Aussparungen auf. Dadurch ist es möglich, nur einen Typ von Spulenkörper herstellen zu müssen, was die Kosten hinsichtlich der Anzahl notwendiger Herstellungswerkzeuge reduziert und damit einhergehend etwaige zusätzliche Produktionsmaschinen überflüssig werden lässt.

Erfindungsgemäß endet die Trennwand vorzugsweise unterhalb eines oberen Abschlusses eines der Befestigungsabschnitte. Dadurch gibt es oberhalb der Trennwand zwischen Seitenwandabschnitten des Halteteils bzw. zwischen einem jeweiligen Seitenwandabschnitt und dem zumindest einen, sich in der Nähe der Trennwand oder mit ihr einstückig ausgebildeten Befestigungsabschnitts einen Raum, der zum Verlegen von Leitungskabeln und/oder einzelnen Leitungen über die Spulenanordnung hinweg beispielsweise zu einem zweiten Stator genutzt werden kann. Der Raum bildet somit einen Kabelkanal.

Erfindungsgemäß können die Haltevorrichtungen im Anschlussteil-Einsetzabschnitt des Halteteils angeordnete bzw. ausgebildete Haltenasen umfassen. Zwischen die Haltenasen wird das Anschlussteil geklipst, was zu einer sehr einfachen Montage des Anschlussteils führt.

Ferner können die Haltevorrichtungen ein Federelement umfassen, mittels dessen das Anschlussteil gegen eine dem Statorteil abgewandte Seite der Trennwand bzw. des einen Befestigungsabschnitts federnd gedrückt wird, was einer positionsgenauen Positionierung des Anschlussteils in bezug auf die Trennwand bzw. den Befestigungsabschnitt dient.

Weitere Merkmale und Vorteile der Erfindung ergeben sich aus der nachfolgenden Beschreibung bevorzugter Ausführungsformen der Erfindung.

Es zeigen:
- Figur 1:: eine perspektivische Ansicht eines Stators gemäß einer Ausführungsform der Erfindung,
- Figur 2:: eine Draufsicht von oben des Stators von Figur 1,
- Figur 3:: den Stator von Figur 2 in vergrößertem Ausschnitt mit Arretierungen gemäß verschiedenen Ausführungen der Erfindung,
- Figur 4:: eine Schnittansicht des Anschluss-Einsetzabschnitts entlang einer Linie D - D des in Figur 2 dargestellten Stators,
- Figur 5:: Vorspannvorrichtungen in verschiedenen Ausführungen,
- Figur 6:: eine Schnittansicht entlang einer Linie A - A des in Figur 2 dargestellten Stators, eingesetzt in ein Tragprofil,
- Figur 7:: eine Schnittansicht entlang einer Linie B - B des in Figur 2 dargestellten Stators, in verschiedenen Ausführungen, jeweils in zwei Anbringzuständen und eingesetzt in ein Tragprofil,
- Figur 8:: eine Schnittansicht entlang einer Linie C - C des in Figur 2 dargestellten Stators und
- Figur 9:: einen Stator mit einem Halteteil gemäß einer zweiten Ausführungsform der Erfindung.

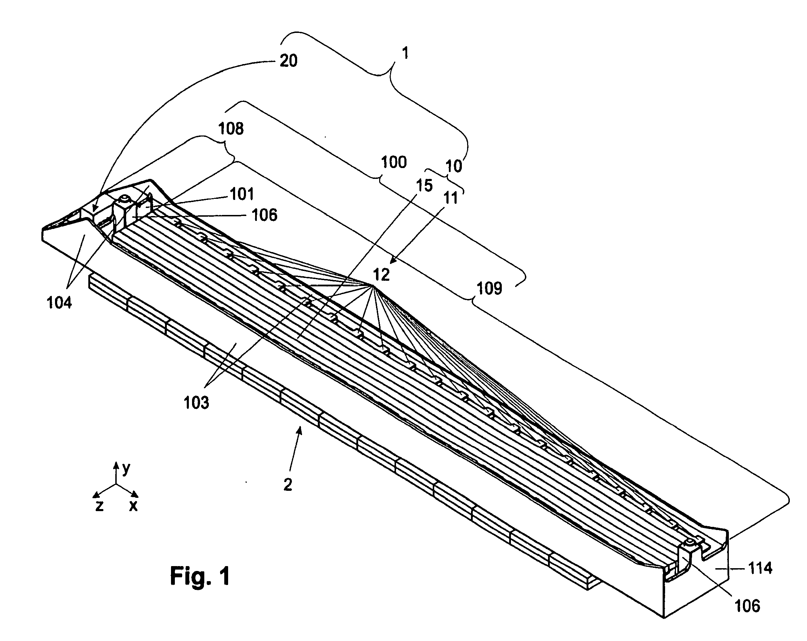

In Figur 1 ist ein Stator 1 gemäß einer ersten Ausführungsform der Erfindung zusammen mit einem Läufer 2 gezeigt. Der Läufer 2 besteht im Wesentlichen aus einer Reihe von Magneten oder ist aus magnetisierbarem Material gebildet. Der Läufer 2 ist in üblicher Weise beispielsweise an einem nicht dargestellten Schiebetürflügel befestigt.

Der Stator 1 umfasst im Wesentlichen drei Teile: ein Statorteil 10, ein Anschlussteil 20 und ein Halteteil 100.

Das Statorteil 10 weist eine Spulenanordnung 11 auf, die in bekannter Weise mit einem magnetischen Rückschlusskörper 15 versehen ist. Das Statorteil 10 dient hauptsächlich der Erzeugung eines magnetischen Wechselfeldes zum Bewegen des Läufers 2 entlang einer Längserstreckung des Statorteils 10. Daneben kann es auch, wenn gewünscht, eine Tragfunktion hinsichtlich beispielsweise eines zu bewegenden Schiebetürflügels übernehmen.

Das Statorteil 10 ist in dem Halteteil 100 aufgenommen. Das Halteteil 100 weist in Längsrichtung gesehen, d. h. in ±x-Richtung in Figur 1, zwei hintereinander liegende Abschnitte auf, einen Anschlussteil-Einsetzabschnitt 108 und einen Statorteil-Einsetzabschnitt 109.

Wie aus Figur 1 ersichtlich, weist das Statorteil 10 ferner in y-Richtung gesehen rückseitig einen magnetischen Rückschlusskörper 15 auf, der vorzugsweise aus geblechten Kernteilen zusammengesetzt ist. Das Statorteil 10 weist ferner Spulenkörper 12 auf, um die nicht dargestellte Wicklungen gewickelt sind. Die Spulenkörper 12 sind vorzugsweise auf den Rückschlusskörper 15 aufgesteckt und weiterhin vorzugsweise mit ihm zu einem Modul vergossen.

An einem dem Anschlussteil-Einsetzabschnitt 108 entfernten Ende des Halteteils 100 ist vorzugsweise ein Abschluss-Wandabschnitt 114 angeordnet bzw. ausgebildet.

Ferner sind vorzugsweise zumindest zwei Befestigungsabschnitte 106 vorgesehen, die einem Anbringen des Stators 1 an einem nicht dargestellten Tragprofil dienen. Einer der zumindest zwei Befestigungsabschnitte 106 ist bevorzugt zwischen dem Anschlussteil-Einsetzabschnitt 108 und dem Statorteil-Einsetzabschnitt 109 angeordnet, wogegen der zweite Befestigungsabschnitt bevorzugt in der Nähe des Abschluss-Wandabschnitts 144 angeordnet und vorzugsweise einstückig mit ihm ausgebildet ist.

Zur Separierung von Anschlussteil-Einsetzabschnitt 108 und Statorteil-Einsetzabschnitt 109 ist eine Trennwand 101 vorgesehen, die sich von einem unteren Abschnitt des Halteteils 100 in y-Richtung und in ±z-Richtung erstreckt. Der andere der zumindest zwei Befestigungsabschnitte 106 ist bevorzugt in der Nähe der Trennwand 101 angeordnet und vorzugsweise einstückig mit ihr ausgebildet.

Das Statorteil 10 ist in den Einsetzabschnitt 109 eingesetzt und gegen eine dem Statorteil 10 zugewandte Seite der Trennwand 101 bzw. des anderen Befestigungsabschnitts 106 vorzugsweise federnd vorgespannt gelagert. Dadurch wird ein im Wesentlichen gleichbleibender Abstand zu der Trennwand 101 bzw. dem anderen Befestigungsabschnitt 106 erreicht. Die Trennwand 101 oder der andere Befestigungsabschnitt 106 dient dabei bevorzugt als Abstützfläche für das Statorteil 10 und/oder für das Anschlussteil 20.

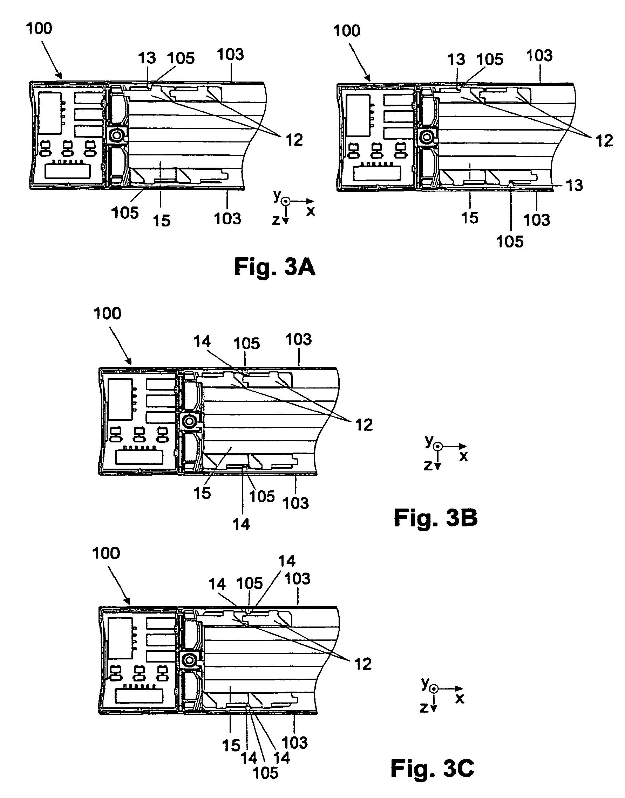

Die Positionierung des Statorteils 10 kann auch, wie in Figuren 3a bis 3c gezeigt, mittels eines In-Eingriff-Stehens zumindest eines Spulenkörpers 12 der Spulenanordnung 11 mit zumindest einer Seitenwand 103 des Halteteils 100 erreicht werden. Dazu weist zumindest die eine Seitenwand 103 in einem Bereich, in dem es an einen Spulenkörper 12 angrenzend angeordnet ist, einen Vorsprung 105 beispielsweise in Form einer Eingriffsnase auf. Der angrenzend angeordnete Spulenkörper 12 weist an einer korrespondierenden Stelle eine vorzugsweise komplementär ausgebildete Ausnehmung 13 auf. Bei einem Einsetzen des Spulenkörpers 12 gelangt der zumindest eine Vorsprung 105 mit der korrespondierenden Ausnehmung 13 in Eingriff.

Um die Beständigkeit der Positionierung zu verbessern, können an der gegenüberliegenden Seitenwand 103 ein gleichartiger Vorsprung 105 und an der entsprechenden Seite des jeweiligen Spulenkörpers 12 eine zweite Ausnehmung 13 ausgebildet sein.

Die Ausnehmungen 13 können auch an verschiedenen Spulenkörpern 12 vorgesehen sein, wie rechts in Figur 3a gezeigt. Dies hat den Vorteil, dass an jeweils lediglich einer Seite zumindest zweier Spulenkörper 12 eine Ausnehmung 14 vorgesehen werden muss.

Ist jeder Spulenkörper 12 jeweils mit solch zwei solcher Ausnehmungen 14 versehen, ergeben sich Kostenvorteile dahingehend, dass nur eine Art von Spulenkörpern 12 hergestellt werden muss, also nur ein Herstellungswerkzeug nötig ist.

Gemäß einer in Figur 3b gezeigten anderen Alternative ist anstelle von Ausnehmungen 13 an einer jeweiligen Ecke eines Spulenkörpers 12 jeweils eine Aussparung 14 vorgesehen bzw. ausgebildet. Der zugehörige Vorsprung 105 ist in der Seitenwand 103 entsprechend versetzt angeordnet oder ausgebildet.

Gemäß einer in Figur 3c gezeigten Alternative ist der jeweilige Vorsprung 105 derart angeordnet, dass, in z-Richtung in Figur 3c gesehen, eine Mittellinie eines jeweiligen Vorsprungs 105 zwischen einander zugewandten Rändern zweier unmittelbar benachbarter Spulenkörper 12 angeordnet ist. Die zwei unmittelbar benachbarten Spulenkörper 12 weisen an dem Vorsprung 105 unmittelbar benachbart angeordneten und einander zugewandten Ecken jeweils eine Aussparung 14 beispielsweise in Form eines Dreiecks auf. Die Aussparungen 14 bilden jeweils eine Hälfte einer Ausnehmung 13. D. h. mittels zweier unmittelbar benachbarter Spulenkörper 12 wird eine Ausnehmung 13 analog zu der in Figur 3a gezeigten gebildet.

Die beschriebenen Vorsprünge 105 können in y-Richtung in Figuren 3a - 3c gesehen durchgehend ausgebildet sein, weshalb die jeweiligen Ausnehmungen 13 bzw. Aussparungen 14 so ausgebildet sein müssen, dass in y-Richtung in Figuren 3a - 3c gesehen ein durchgehender Hohlraum zwischen Spulenkörper 12 und jeweiliger Seitenwand 103 besteht.

Vorzugsweise sind die Vorsprünge 105 in einem unteren Bereich des Halteteils 100 ausgebildet, sodass ein derartiger durchgehender Hohlraum nicht erforderlich ist.

Sollte der Spulenkörper 12 nach dem Einsetzen in das Halteteil 100 Spiel haben, d. h. besteht die Gefahr, dass der Spulenkörper 12 seine Position verändern könnte, kann zusätzlich eine nicht dargestellte Vorspannvorrichtung vorgesehen sein, sodass das Statorteil 10 federnd vorgespannt gelagert ist.

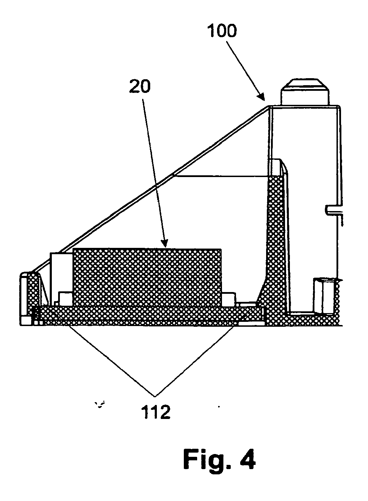

Um das Anschlussteil 20 in Bezug auf das Statorteil 10 so präzise wie möglich zu positionieren, ist, wie in Figur 4 gezeigt, eine Befestigungsvorrichtung in Form von Haltenasen 112 vorgesehen. Die Haltenasen 112 sind in einem unteren Abschnitt des Halteteils 100 angeordnet und einander zugewandt angeordnet bzw. ausgebildet. Das Anschlussteil 20 wird in die Haltenasen 112 eingeklipst, was eine sehr einfache Montage darstellt.
Sollte zwischen dem Anschlussteil 20 und einer der Haltenasen 112 im Montagezustand Spiel bestehen, kann analog zum Statorteil 10 auch das Anschlussteil 20 federnd vorgespannt gelagert sein.

Die beschriebene Lösung mit dem Vorsprung 105 für das Statorteil 10 ist auch auf das Anschlussteil 20 anwendbar. Das Anschlussteil 20 weist üblicherweise eine Platine auf. Die Platine, oder ein jeweiliges Bodenteil des Anschlussteils 20 weist dementsprechend die jeweilige/n Ausnehmung/en 13 bzw. Aussparung/en 14 auf.

Die beschriebene Lösung mit den Haltenasen 112 für das Anschlussteil 20 ist auch auf das Statorteil 10 anwendbar. Das Statorteil 10 benötigt in dem Fall keine Ausnehmungen 13 oder Aussparungen 14. In dem Fall weisen bevorzugt die Seitenwände 103 Haltenasen 112 auf, wobei vorzugsweise an jeder Seitenwand 103 vorzugsweise jeweils zumindest zwei Haltenasen 112 angeordnet oder ausgebildet sind und in Richtung der jeweils anderen Seitenwand 103 weisen.

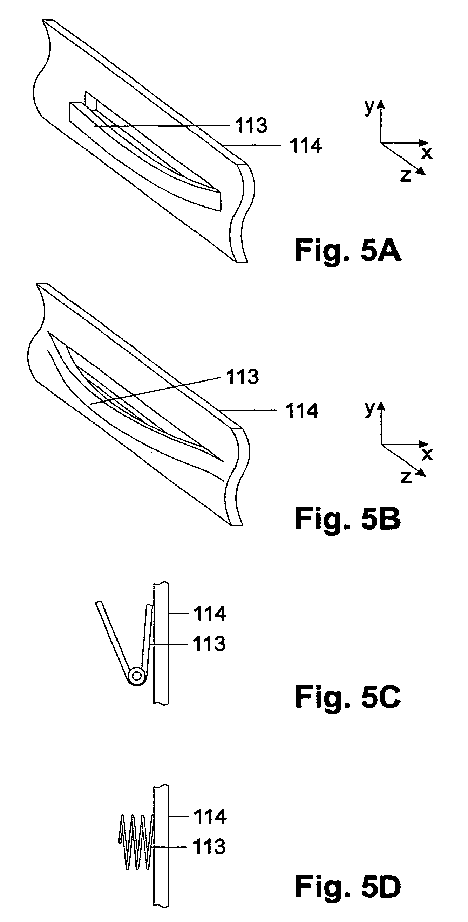

Hinsichtlich der Feder-Vorspannung sind in Figur 5 verschiedene Lösungen beispielhaft für das Statorteil 10 angegeben. Sie sind analog auf das Anschlussteil 20 anwendbar.

Wie in Figur 5A dargestellt, ist eine Vorspannvorrichtung 30 gemäß einer ersten Ausführungsform der Erfindung mittels eines Federvorsprungs 113 gebildet, der vorzugsweise aus dem Wandabschnitt 114 heraus geschnitten bzw. geformt ist. Er erstreckt sich in -z-Richtung in Figur 5A in Verbindung, und sein freies Ende steht in -x-Richtung, d. h. in Richtung Statorteil 10 bzw. Anschlussteil 20, hervor.

Gemäß einer zweiten, in Figur 5B gezeigten Ausführung ist die Vorspannvorrichtung 30 ebenfalls mittels eines aus dem Wandabschnitt 114 des Halteteils 100 geschnittenen Federvorsprungs 113 gebildet, Der Federvorsprung 113 ist in einem Mittenbereich in Richtung Statorteil 10 oder Anschlussteil 20 hervor stehend ausgebildet. Der Unterschied zu der in Figur 5A gezeigten Ausführung besteht darin, dass der Federvorsprung 113 kein freies Ende aufweist.

Alternativ kann die Vorspannvorrichtung 30 auch mittels einer separat ausgebildeten Feder gebildet sein. Gemäß einer in Figur 5C gezeigten Variante handelt es sich vorzugsweise um ein als Schenkelfeder ausgebildetes Federelement 113. Es kann aber auch, wie in Figur 5D gezeigt, mittels einer Spiralfeder gebildet sein, die an dem Wandabschnitt 114 abgestützt ist.

Es sind selbstverständlich andere Federanordnungen möglich, insoweit sie das Statorteil 10 bzw. das Anschlussteil 20 in Richtung des jeweils anderen Teils 20 bzw. 10 drängen.

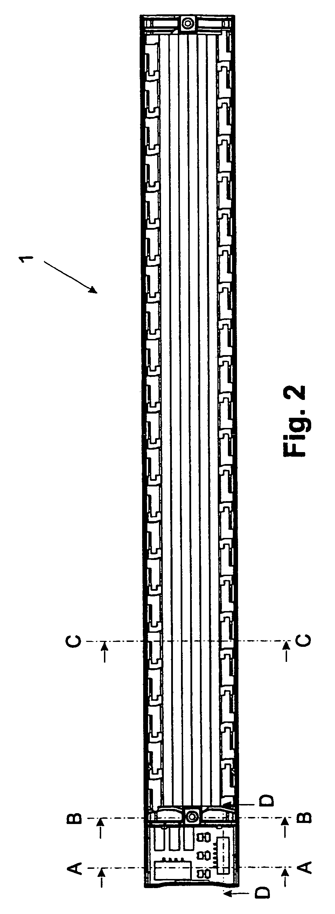

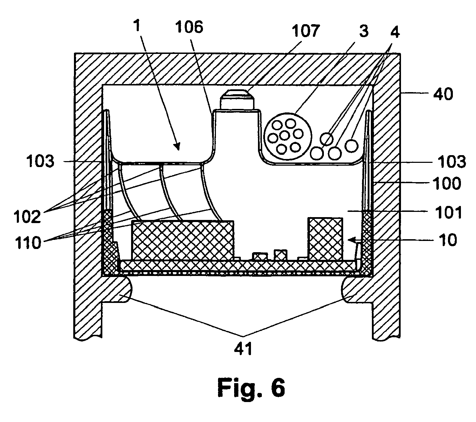

Figur 6 zeigt eine Schnittansicht des Stators 1 entlang der Schnittlinie A - A in Figur 2. Wie zu sehen, ist der Stator 1 in ein Tragprofil 40 eingesetzt. Es ist lediglich der für die Aufnahme des Stators 1 vorgesehene Abschnitt des Tragprofils 40 dargestellt. Auch wenn das Tragprofi 40 als oben abgeschlossen dargestellt ist, kann es oberhalb des Stators 1 in jeder beliebigen Art und Weise ausgebildet sein.

Der Stator 1 ist im in Figur 6 dargestellten Zustand lediglich in das Tragprofil 40 eingesetzt bzw. eingeschoben und ruht auf jeweils seitlich in Figur 6 ausgebildeten Vorsprüngen 41.

Wie in Figur 6 gezeigt, enden die Befestigungsabschnitte 106, und die Trennwand 101 bzw. der nicht gezeigte Wandabschnitt 114, in einem Mittenabschnitt, vorzugsweise oberhalb des Anschlussteils 20 und des in dieser Ansicht hinter der Trennwand befindlichen und daher nicht sichtbaren Statorteils 10.

Die Trennwand 101 und falls ein Wandabschnitt 114 vorhanden ist enden in Bereichen seitlich des jeweiligen Befestigungsabschnitts 106 in Figur 6 jeweils unterhalb der Befestigungsabschnitte 106. Dies bedeutet, dass in den Bereichen seitlich der Befestigungsabschnitte 106 und seitlichen Wänden des Tragprofils 40 jeweils ein Hohlraum entsteht. Diese Bereiche sind vorzugsweise vorgesehen, Leitungskabel 3 oder einzelne Leitungen 4 hindurch führen bzw. verlegen zu können.

Dies ist insbesondere günstig, wenn beispielsweise zwei Statoren 1 mit ein und derselben Ansteuerschaltung betrieben werden sollen. Ein zweiter Anwendungsfall könnte sein, wenn Strom- und/oder Datenleitungen zu Sensoren, wie beispielsweise Rauchmeldern, oder dergleichen geführt werden sollen.

Zum Anschließen des Statorteils 10 an das Anschlussteil 20 sind im Falle einer Trennwand 101 in dieser in zumindest einem Bereich seitlich des jeweiligen Befestigungsabschnitts Leitungs-Durchführungen 102 vorgesehen. Im einfachsten Fall sind dies keilförmige Schlitze, in die eine jeweilige Anschlussleitung 110 gedrückt und damit fixiert ist. Gemäß einer Weiterbildung der Erfindung wird dabei die Isolierung der jeweiligen Anschlussleitung 110 eingeschnitten.

Vorzugsweise enden, wie ebenfalls in Figur 6 gezeigt, die Seitenwände 103 des Halteteils 100 zumindest in Bereichen, die dem jeweiligen Befestigungsabschnitt 106 in einer Höhe wie die Befestigungsabschnitte 106. In Verbindung mit dem Rückschlusskörpers der nicht dargestellten Spulenanordnung 11 entsteht somit ein Aufnahmeraum in Form eines Kabelkanals für die zu verlegenden Leitungskabel 3 bzw. Leitungen 4. Die Leitungskabel 3 bzw. Leitungen 4 können dadurch in den Stator 1 integriert, d. h. in ihm verlegt werden, bevor dieser am Tragprofil 40 angebracht wird.

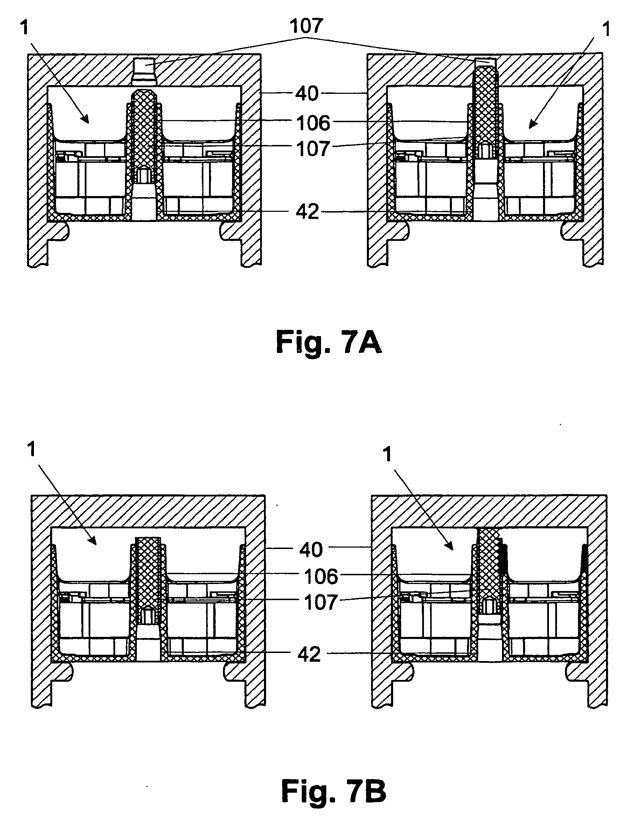

Um den Stator 1 ortsfest anbringen zu können, weisen gemäß einer ersten, in Figur 7A gezeigten Ausführungsform der Erfindung die vorzugsweise zwei Befestigungsabschnitte 106 eine sich in Figur 7A vertikal erstreckende Durchgangsöffnung 42 mit einem Innengewinde auf. In die Durchgangsöffnung 42 ist von unten in Figur 7A eine Befestigungsschraube 107, hier in Form eine Gewindestifts mit Innensechskant-Kopfteil, eingeschraubt. Die Befestigungsschraube 107 ist somit beim Montieren des Stators 1 von unten her zugänglich.

Beim Montieren wird in das Tragprofil 40 an einer gewünschten Stelle ein Loch 115 vorgebohrt, das einen Durchmesser aufweist, der kleiner oder gleich einem innerem Außendurchmesser eines Gewindes der Befestigungsschraube 107 ist.

Beim Anbringen des Stators 1 schneidet sich die Befestigungsschraube 107 beim Einschrauben in das Tragprofil 40, was zu einem rechts in Figur 7A gezeigten Zustand führt.

Alternativ ist die Durchgangsöffnung 42 im Befestigungsabschnitt 106 ohne Gewinde ausgebildet und weist einen Durchmesser auf, der gleich oder geringfügig größer als ein äußerer Durchmesser des Gewindes des Gewindestifts 107 ist. Die Befestigungsschraube 107 weist an einem unteren Ende, d. h. an ihrem Kopfende, vorzugsweise einen größeren Außendurchmesser als ihrem Gewindeabschnitt auf, und die Durchgangsöffnung 42 weist in einem Bereich für den Kopf der Befestigungsschraube 107 einen größeren Innendurchmesser auf. Die Befestigungsschraube 107 wird somit lediglich im Tragprofil 40 nicht aber im Befestigungsabschnitt 106 festgeschraubt.

Anstelle des Gewindestifts 107 ist jede Art von Befestigungsschrauben, beispielsweise in Form von Senkkopfschrauben, möglich. Ferner kann eine Klemmung vorgesehen sein, insofern diese eine ausreichende Sicherheit bei der Anbringung und Fixierung des Stators 1 im Tragprofil 40 insbesondere im Betrieb bei Wechselwirkung mit einem Läufer 2 bietet.

Ausgehend von der in Figur 7A gezeigten Lösung kann anstelle eines Einschraubens in das Tragprofil 40 gemäß einer in Figur 7B dargestellten Lösung vorgesehen sein, dass sich die Befestigungsschraube 107 an einer oberen Innenseite des Tragprofils 40 abstützt. D. h. ein Einschrauben der Befestigungsschraube 107 führt zu einer Verklemmung des Stators 1 zwischen besagter oberer Innenseite und Haltevorsprüngen 41 des Tragprofils 40, auf denen das Halteteil 100 an unteren Randbereichen zu liegen kommt. Der Vorteil dieser Lösung besteht darin, dass der Stator 1 zerstörungsfrei (in bezug auf das Tragprofil 40) angebracht und fixiert werden kann, was ein Versetzen des Stators 1 im Nachhinein weiter vereinfacht und verbessert. Es müssen keine etwaigen, bereits vorhandenen Löcher im Tragprofil 40 berücksichtigt werden.

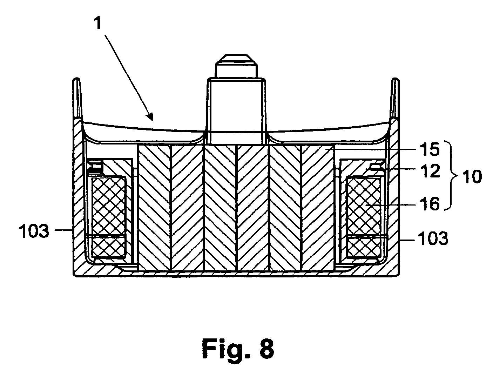

In Figur 8 zeigt eine Schnittansicht entlang einer Linie C - C des in Figur 2 dargestellten Stators 1. Die Spulenkörper 12 umfassen eine schematisch dargestellte Wicklung 16, wobei der Rückschlusskörper 15 in Figur 8 im Wesentlichen mittig angeordnet ist. Die Seitenwandabschnitte 103 sind vorzugsweise so ausgebildet, dass sie in einem unteren Bereich einen geringeren Abstand zueinander aufweisen als darüber. Dadurch ist es möglich, das Statorteil 10 einfach und verkantungsfrei einzusetzen.

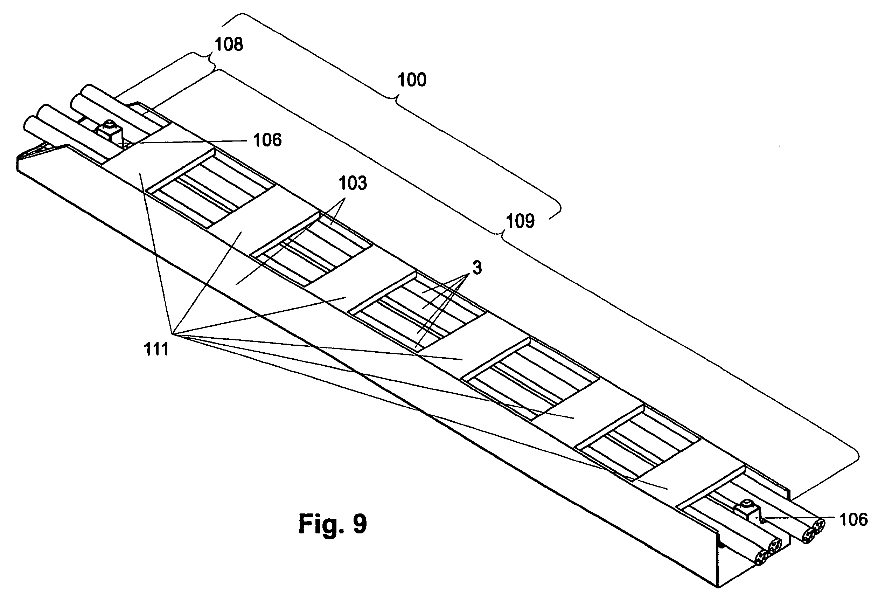

Gemäß einer zweiten, in Figur 9 gezeigten zweiten Ausführungsform der Erfindung weist das Halteteil 100 Seitenwände 103 auf, die über eine gesamte Erstreckung zumindest des Statorteil-Einsetzabschnitts 109 in einer selben Höhe enden, und zwar vorzugsweise so wie die zumindest zwei Befestigungsabschnitte 106. Zwischen den Seitenwänden 103 sind zumindest abschnittsweise Verbindungen in Form von Stegen 111 ausgebildet, die zum einen dem Halteteil eine höhere Steifigkeit verleihen. Zum anderen halten sie etwaig verlegte Leitungskabel 3 und/oder Leitungen 4 im weiter oben beschriebenen Aufnahmeraum unten, sodass sie bei einer Montage oder Demontage des Stators 1 aus dem Tragprofil 40 zumindest nicht so leicht herausrutschen oder dabei beschädigt werden können. Die Stege 111 sind vorzugsweise einstückig mit den Seitenwänden 103 ausgebildet.

Anstelle der Stege 111 kann auch eine Gesamtabdeckung vorgesehen sein, sodass zumindest das Statorteil 10 vollständig umschlossen ist. Solch eine Gesamtabdeckung kann mittels eines Deckelteils gebildet werden, der vorzugsweise auf das Halteteil 100 geklipst wird.

Der hierin dargestellte Stator ist neben Schiebetürantrieben auch bei Linearmotoren einsetzbar, die als Antrieb bei Teleskopschiebetüren, Bogen-schiebetüren, Karusselltüren, Faltflügeltüren, mobile Trennwände oder dergleichen genutzt werden.

### Bezugszeichenliste

- 1: Stator
- 2: Läufer
- 3: Leitungskabel

- 10: Statorteil
- 11: Spulenanordnung
- 12: Spulenkörper
- 13: Halteausnehmung
- 14: Aussparung
- 15: Rückschlusskörper
- 16: Wicklung

- 20: Anschlussteil

- 30: Vorspannvorrichtung

- 40: Tragprofil
- 41: Vorsprung
- 42: Öffnung

- 100: Halteteil
- 101: Trennwand
- 102: Leitungsdurchführung
- 103: Seitenwand
- 104: Seitenwandabschnitt
- 105: Vorsprung
- 106: Einsetzabschnitt
- 107: Befestigungsschraube
- 108: Anschlussteil-Einsetzabschnitt
- 109: Statorteil-Einsetzabschnitt
- 110: Anschlussleitung
- 111: Verbindungssteg
- 112: Haltenase
- 113: Federelement
- 114: Abschluss-Wandabschnitt
- 115: Loch

## Patentansprüche

1. Linearmotor-Stator (1), aufweisend ein Statorteil (10) mit einer Spulenanordnung (11), ein Anschlussteil (20), das externe Anschlüsse aufweist, und ein Halteteil (100), das in einen Anschlussteil-Einsetzabschnitt (108) und einen Statorteil-Einsetzabschnitt (109) unterteilt ist und Haltevorrichtungen (105, 112) zum ortsfesten, zueinander positionsgenauen und lösbaren Anordnen des Statorteils (10) und des Anschlussteils (20) aufweist,
**dadurch gekennzeichnet,**
**dass** das Anschlussteil (20) eine Sensoranordnung mit zumindest einem Hall-Sensor und externe Anschlüsse (21) für diese Sensoranordnung aufweist, und
**dass** eine Unterteilung des Halteteils (100) mittels einer Trennwand (101) erfolgt, die am Halteteil (100) zwischen Anschlussteil (20) und Statorteil (10) ausgebildet bzw. angeordnet ist, wobei die Trennwand (101) einen horizontal in Richtung einer dem Statorteil (10) zugewandten Seite der Trennwand (101) gesehen mittig angeordneten, sich in eine Richtung von einem Läufer (2) weg erstreckenden Abschnitt aufweist und das Halteteil (100) zumindest in einem Bereich der Trennwand (101) zumindest einen Seitenwandabschnitt (104) aufweist, der sich in die Richtung von dem Läufer (2) weg und im Wesentlichen senkrecht zur Trennwand (101) erstreckend angeordnet ist, so dass zwischen dem Abschnitt der Trennwand (101) und dem zumindest einen Seitenwandabschnitt (104) ein Aufnahmeraum gebildet wird.

2. Stator (1) gemäß Anspruch 1, ferner aufweisend zumindest zwei Befestigungsabschnitte (106), die so ausgebildet sind, dass der Stator (1) mittels ihnen an einem Trageprofil (40) fixierbar ist.

3. Stator (1) gemäß Anspruch 2, wobei sich die Befestigungsabschnitte (106) in eine Richtung von einem Läufer (2) weg erstrecken und jeweils ein Fixierungsmittel (107) aufweisen.

4. Stator (1) gemäß Anspruch 3, wobei die Fixierungsmittel (107) zumindest eine Klemmschraube umfassen.

5. Stator (1) gemäß Anspruch 3 oder 4, wobei die Fixierungsmittel (107) zumindest eine Schraube umfassen, die bei einer Montage in das Trageprofil (40) eingeschraubt wird.

6. Stator (1) gemäß Anspruch 2 wobei die Trennwand (101) unterhalb eines oberen Abschlusses der zumindest zwei Befestigungsabschnitte (106) endet.

7. Stator (1) gemäß Anspruch 1, wobei die Haltevorrichtungen Federelemente (113) umfassen, mittels denen das Statorteil (10) gegen eine dem Statorteil (10) zugewandte Seite der Trennwand (101) federnd gedrückt wird.

8. Stator (1) gemäß einem der Ansprüche 1 und 7, wobei die Trennwand (101) Durchführungen (102) für Leitungen (12) für ein Koppeln von Anschlussteil (20) und Statorteil (10) aufweist.

9. Stator (1) gemäß Anspruch 8, wobei die Durchführungen (102) mittels Leitungsschlitzen gebildet sind, in die jeweils eine der Leitungen (12) geklemmt ist.

10. Stator (1) gemäß Anspruch 1, wobei die Unterteilung des Halteteils (100) mittels eines der zumindest zwei Befestigungsabschnitte (106) erfolgt, wobei dieser zwischen Anschlussteil (20) und Statorteil (10) angeordnet ist.

11. Stator (1) gemäß Anspruch 10, wobei die Haltevorrichtungen Federelemente (113) umfassen, mittels denen das Statorteil (10) gegen den einen Befestigungsabschnitt (106) federnd gedrückt wird.

12. Stator (1) gemäß einem der vorhergehenden Ansprüche, wobei die Haltevorrichtungen zumindest einen, im Statorteil-Einsetzabschnitt (109) und in einer Seitenwand (103) des Halteteils (100) ausgebildeten Haltevorsprung (105) aufweisen, der sich von der Seitenwand (103) in Richtung einer anderen, gegenüberliegenden Seitenwand (103) des Halteteils (100) erstreckend angeordnet ist, wobei zumindest ein Spulenkörper (12) der Spulenanordnung (11) eine Halteausnehmung derart aufweist, dass die zumindest eine Halteausnehmung bei einem Einsetzen des Statorteils (10) in den Statorteil-Einsetzab-schnitt (109) des Halteteils (100) mit dem zumindest einen Haltevorsprung (105) in Eingriff gelangt.

13. Stator (1) gemäß Anspruch 12, wobei die Halteausnehmung mittels einer in dem zumindest einen Spulenkörper (12) der Spulenanordnung (11) ausgebildeten Ausnehmung (13) gebildet ist, der an der zumindest einen Halteausnehmung unmittelbar benachbart angeordnet ist.

14. Stator (1) gemäß Anspruch 11, wobei die Halteausnehmung mittels zweier, an einander gegenüberliegenden, einander zugewandten Ecken zumindest ausgebildeter Aussparungen (14) zweier benachbarter Spulen (12) der Spulenanordnung (11) gebildet ist.

15. Stator (1) gemäß Anspruch 13 oder 14, wobei die Ausnehmungen (13) bzw. Aussparungen (14) an jedem Spulenkörper (12) der Spulenanordnung (11) ausgebildet sind.

16. Stator (1) gemäß einem der vorhergehenden Ansprüche, wobei die Haltevorrichtungen Haltenasen (112) umfassen, zwischen die das Anschlussteil (20) geklipst ist.

17. Stator (1) gemäß Anspruch 16, wobei die Haltevorrichtungen ferner ein Federelement (113) umfassen, mittels dessen das Anschlussteil (20) gegen eine dem Anschlussteil (10) zugewandte Seite einer Trennwand (101) oder einen Befestigungsabschnitt (106) federnd gedrückt wird.

## Claims

1. A linear motor stator (1), having a stator member (10) with a coil arrangement (11), a connecting member (20), which includes external terminals, and a holding member (100), which is subdivided into a connecting member insertion portion (108) and a stator member insertion portion (109), and has holding devices (105, 112) for a stationary, releasable disposition of the stator member (10) and of the connecting member (20) in an accurate position with regard to each other.
**characterized in**
**that** the connector member (20) includes a sensor arrangement with at least one Hall sensor and external terminals (21) for said sensor arrangement, and
in that a subdivision of the holding member (100) is realized by means of a separation wall (101), which is configured, respectively disposed between the connecting member (20) and the stator member (10), wherein the separation wall (101) has a section, which is centrally disposed, when seen in the horizontal direction of a side of the separation wall (101) facing the stator member (10), and which extends in a direction away from a rotor (2), and wherein the holding member (100), at least in an area of the separation wall (101), has at least one sidewall section (104), which is disposed in the direction away from the rotor (2) and extends essentially vertically with regard to the separation wall (101), forming a reception space between the section of the separation wall (101) and the at least one sidewall section (104).

2. The stator (1) according to claim 1, furthermore including at least two attachment portions (106), which are configured such as to be able, by means of them, to fix the stator (1) to a carrying profile (40).

3. The stator (1) according to claim 2, wherein the attachment portions (106) extend in a direction leading away from a rotor (2) and respectively include one fixing means (107).

4. The stator (1) according to claim 3, wherein the fixing means (107) comprise at least one clamping screw.

5. The stator (1) according to claim 3 or 4, wherein the fixing means (107) comprise at least one screw, which, during an installation, is screwed into the carrying profile (40).

6. The stator (1) according to claim 2, wherein the separation wall (101) terminates below an upper termination of the at least two attachment portions (106).

7. The stator (1) according to claim 1, wherein the holding devices comprise spring elements (113), by means of which the stator member (10) is resiliently pressed against a side of the separation wall (101) facing the stator member (10).

8. The stator (1) according to any of the claims 1 to 7, wherein the separation wall (101) has lead-throughs (102) for lines (12) intended for coupling of the connecting member (20) and of the stator member (10).

9. The stator (1) according to claim 8, wherein the lead-throughs (102) are formed by means of chases into which respectively one of the lines (12) is clamped.

10. The stator (1) according to claim 1, wherein the subdivision of the holding member (100) is accomplished by means of one of the at least two attachment portions (106), the latter being disposed between the connecting member (20) and the stator member (10).

11. The stator (1) according to claim 10, wherein the holding devices comprise spring elements (113), by means of which the stator member (10) is resiliently pressed against the one attachment portion (106).

12. The stator (1) according to any of the preceding claims, wherein the holding devices include at least one holding projection (105), which is configured in the stator member insertion portion (109) and in a sidewall (103) of the holding member (100) and is disposed to extend from the sidewall (103) in the direction of another opposite sidewall (103) of the holding member (100), wherein at least one coil former (12) of the coil arrangement (11) has a holding recess such that, during an insertion of the stator member (10) into the stator member insertion portion (109) of the holding member (100), the at least one holding recess reaches engagement with the at least one holding projection (105).

13. The stator (1) according to claim 12, wherein the holding recess is formed by means of a recess (13) configured in the at least one coil former (12) of the coil arrangement (11), which coil former is disposed directly adjacent to the at least one holding recess.

14. The stator (1) according to claim 11, wherein the holding recess is formed by means of two sparings (14) of two adjacent coils (12) of the coil arrangement (11), which sparings are configured at corners, which are located opposite each other and face each other.

15. The stator (1) according to claim 13 or 14, wherein the recesses (13), respectively the sparings (14) are configured at each coil former (12) of the coil arrangement (11).

16. The stator (1) according to any of the preceding claims, wherein the holding devices comprise holding noses (112), between which the connecting member (20) is clipped.

17. The stator (1) according to claim 16, wherein the holding devices furthermore comprise a spring element (113), by means of which the connecting member (20) is resiliently pressed against a side of a separation wall (101) facing the connecting member (20) or against an attachment portion (106).

## Revendications

1. Stator d'un moteur linéaire (1), présentant un membre de stator (10) avec un agencement de bobines (11), un membre de connexion (20), lequel présente des raccords extérieurs, et un membre de retenue (100), lequel est subdivisé en une section d'insertion de membre de connexion (108) et une section d'insertion de membre de stator (109), et présente des dispositifs de retenue (105, 112) pour agencer le membre de stator (10) et le membre de connexion (20) de façon stationnaire, en position précise l'un par rapport à l'autre et détachable,
**caractérisé en ce**
**que** le membre de connexion (20) présente un agencement de capteurs avec au moins un capteur Hall et des raccords extérieurs (21) pour cet agencement de capteurs, et
**qu'**une subdivision du membre de retenue (100) s'effectue au moyen d'une paroi de séparation (101) laquelle est aménagée, respectivement agencée sur le membre de retenue (100) entre le membre de connexion (20) et le membre de stator (10), la paroi de séparation (101) présentant une section, qui est agencé au centre, vue horizontalement en direction d'une face de la paroi de séparation (101) orientée vers le membre de stator (10), et qui s'étend en une direction en s'éloignant d'un rotor (2), et le membre de retenue (100) présentant au moins dans une région de la paroi de séparation (101) au moins une section de paroi latérale (104), laquelle est agencée en la direction du rotor (2) en s'éloignant de celui-ci et essentiellement perpendiculairement par rapport à la paroi de séparation (101) de sorte qu'un compartiment de réception est formé entre la section de la paroi de séparation (101) et ladite au moins une section de paroi latérale (104).

2. Stator (1) selon la revendication 1, présentant en outre au moins deux sections d'attachement (106), lesquelles sont aménagées de telle façon qu'elles permettent de fixer le stator (1) sur un profilé de support (40).

3. Stator (1) selon la revendication 2, dans lequel les sections d'attachement (106) s'étendent en une direction en s'éloignant d'un rotor (2) et présentent respectivement un moyen de fixation (107).

4. Stator (1) selon la revendication 3, dans lequel les moyens de fixation (107) comportent au moins une vis de serrage.

5. Stator (1) selon la revendication 3 ou 4, dans lequel les moyens de fixation (107) comportent au moins une vis, laquelle est vissée lors d'un montage dans le profilé de support (40).

6. Stator (1) selon la revendication 2, dans lequel la paroi de séparation (101) se termine en-dessous d'une terminaison supérieure desdits au moins deux sections d'attachement (106).

7. Stator (1) selon la revendication 1, dans lequel les dispositifs de retenue comportent des éléments à ressort (113) au moyen desquels le membre de stator (10) est poussé de façon élastique contre une face de la paroi de séparation (101) tournée vers le membre de stator (10).

8. Stator (1) selon l'une des revendications 1 et 7, dans lequel la paroi de séparation (101) présente des passages (102) pour des lignes (12) pour un accouplement du membre de connexion (20) et du membre de stator (10).

9. Stator (1) selon la revendication 8, dans lequel les passages (102) sont aménagés au moyen de fentes pour fils, dans lesquelles respectivement une des lignes (12) est serrée.

10. Stator (1) selon la revendication 1, dans lequel la subdivision de membre de retenue (100) s'effectue au moyen d'une desdites au moins deux sections d'attachement (106), laquelle est agencée entre le membre de connexion (20) et le membre de stator (10).

11. Stator (1) selon la revendication 10, dans lequel les dispositifs de retenue comportent des éléments à ressort (113), au moyen desquels le membre de stator (10) est poussé de façon élastique contre ladite une section d'attachement (106).

12. Stator (1) selon l'une des revendications précédentes, dans lequel les dispositifs de retenue présentent au moins une projection de retenue (105) aménagée dans la section d'insertion de membre de stator (109) et une paroi latérale (103) du membre de retenue (100), laquelle projection est agencée en s'étendant de la paroi latérale (103) en direction d'une autre paroi latérale en face (103) du membre de retenue (100), au moins un corps de bobine (12) de l'agencement de bobines (11) présente un évidement de retenue de telle façon que ledit au moins un évidement de retenue aboutit en engagement avec ladite au moins une projection de retenue (105) lors d'une insertion du membre de stator (10) dans la section d'insertion de membre de stator (109) du membre de retenue (100).

13. Stator (1) selon la revendication 12, dans lequel l'évidement de retenue est aménagé au moins par un évidement (13) aménagé dans ledit au moins un corps de bobine (12) de l'agencement de bobines (11) et agencé directement avoisinant ladite au moins une projection de retenue.

14. Stator (1) selon la revendication 11, dans lequel l'évidement de retenue est aménagé au moyen de deux renfoncements (14) de deux bobines (12) avoisinants de l'agencement de bobines (11) lesquels renfoncements sont aménagés au moins sur des côtés vis-à-vis et l'un en face de l'autre.

15. Stator (1) selon la revendication 13 ou 14, dans lequel les évidements (13), respectivement les renfoncements (14) sont aménagés sur chaque corps de bobine (12) de l'agencement de bobines (11).

16. Stator (1) selon l'une des revendications précédentes, dans lequel les dispositifs de retenue comportent des nez de retenue (112) entre lesquels le membre de connexion (20) est encastré.

17. Stator (1) selon la revendication 16, dans lequel les dispositifs de retenue comportent en outre des éléments à ressort (113), au moyen desquels le membre de connexion (20) est poussé de façon élastique contre une face de la paroi de séparation (101) tournée vers le membre de connexion (20) ou contre une section d'attachement (106).
